Europäisches Patentamt

European Patent Office

Office européen des brevets

(19)

(11) **EP 0 666 884 B1**

(12) # FASCICULE DE BREVET EUROPEEN

(45) Date de publication et mention
de la délivrance du brevet:
**23.04.1997 Bulletin 1997/17**

(21) Numéro de dépôt: 93924113.9

(22) Date de dépôt: 27.10.1993

(51) Int Cl.6: **C08K 3/04**, C08L 49/00, H01M 4/60

(86) Numéro de dépôt international:
**PCT/FR93/01050**

**WO 94/10234 (11.05.1994 Gazette 1994/11)**

(54) **COMPOSE D'INSERTION POLYACETYLENE-LITHIUM, SON UTILISATION DANS UN ACCUMULATEUR ELECTRIQUE, ET PROCEDE DE PREPARATION DE COMPOSES D'INSERTION DU TYPE POLYMERE CONJUGUE-LITHIUM**

EINLAGERUNGSVERBINDUNG AUS POLYACETHYLEN-LITHIUM, SEINE VERWENDUNG IN ELEKTRISCHEN SPEICHERMEDIEN UND VERFAHREN ZUR HERSTELLUNG VON EINLAGERUNGSVERBINDUNGEN AUS KONJUGIERTEN POLYMEREN UND LITHIUM

POLYACETYLENE-LITHIUM INSERTION COMPOUND, ITS USE IN A STORAGE CELL AND PROCESS FOR THE PREPARATION OF LITHIUM-CONJUGATED POLYMER TYPE INSERTION COMPOUNDS

(84) Etats contractants désignés:
**BE DE DK ES GB IT NL**

(30) Priorité: **28.10.1992 FR 9212856**

(43) Date de publication de la demande:
**16.08.1995 Bulletin 1995/33**

(73) Titulaire: **CENTRE NATIONAL D'ETUDES SPATIALES**
**F-75039 Paris Cedex 01 (FR)**

(72) Inventeurs:
• **WILLMANN, Patrick**
  **F-31450 Montgiscard (FR)**
• **BILLAUD, Denis**
  **F-54000 Nancy (FR)**
• **HENRY, François Xavier**
  **Bâtiment les Pivoines, F-54000 Nancy (FR)**

(74) Mandataire: **Des Termes, Monique et al**
**Société Brevatome**
**25, rue de Ponthieu**
**75008 Paris (FR)**

(56) Documents cités:
**US-A- 4 624 761**

• **Solid State Comm. Vol. 76, p. 591-594 (1990)**
• **Synth.Metals Vol. 28, D1-D10 (1989)**
• **J.Polym.Science Vol. 12, 11-20(1974)**

Remarques:
Le dossier contient des informations techniques présentées postérieurement au dépôt de la demande et ne figurant pas dans le présent fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention a pour objet un composé d'insertion polyacétylène-lithium, utilisable en particulier comme électrode négative dans un accumulateur électrique.

Depuis quelques années on a développé des générateurs électrochimiques au lithium en raison de leur très forte énergie massique potentielle. Ces générateurs électrochimiques comprennent une électrode positive, un électrolyte liquide ou solide conducteur par ions lithium et une électrode négative à base de lithium.

Généralement, le fonctionnement de ces générateurs met en oeuvre des processus d'intercalation puis de désintercalation du lithium.

Pour l'électrode négative, on peut utiliser des composés d'insertion du lithium à bas potentiel par rapport au lithium.

Parmi les composés de ce type, on connait des composés d'insertion polyacétylène-lithium tels que ceux décrits par Fouletier et al dans Solid State Ionics, 8, 1983, p. 165-168, par Shacklette et al dans J. Electrochem. Soc., vol. 132, n° 7, 1985, p. 1529-1535 et par Jow et al dans J. Electrochem. Soc., vol. 135, n° 3, 1988, p. 541 à 548.

Les composés d'insertion polyacétylène-lithium décrits dans ces documents sont préparés par voie électrochimique en utilisant un électrolyte dans un milieu organique solide ou liquide.

On connait aussi des procédés chimiques de préparation de polyacétylènes dopés par du lithium tels que ceux décrits par Murthy et al dans Phy. Rev. B, Rapid Comm., vol. 40, n° 18, 1989, p. 12550-12553, et par Leitner et al dans Synth. Met., vol. 28, 1989, p. D225-D229.

Le procédé décrit par Murthy et al consiste à réaliser le dopage d'un film de polyacétylène en utilisant un solvant organique contenant un composé de lithium, par exemple du butyl lithium dans de l'hexane, du phényl lithium dans un mélange cyclohexane-éther diéthylique, ou du biphényl lithium dans du 2-méthyl tétrahydrofurane. Le procédé décrit par Leitner et al consiste à utiliser une technique d'évaporation sous vide du lithium sur un film de polyacétylène.

Ces procédés sont plus faciles à mettre en oeuvre que les procédés électrochimiques, mais ils ne permettent pas de contrôler la stoechiométrie du composé d'insertion polyacétylène-lithium obtenu, en particulier de saturer le polyacétylène en lithium pour atteindre au moins la stoechiométrie $Li(CH)_6$.

La présente invention a précisément pour objet un procédé de préparation de composés d'insertion du type polymère conjugué-lithium, en particulier de composés d'insertion polyacétylène-lithium, qui permet d'atteindre des stoechiométries plus élevées en lithium des composés.

Aussi, l'invention a pour objet un composé d'insertion polyacétylène-lithium constitué uniquement de chaînes de polyacétylène et de lithium, caractérisé en ce qu'il contient au moins six groupes CH par atome de lithium et en ce qu'il présente une structure cristalline monoclinique.

Ce composé d'insertion polyacétylène-lithium est donc très intéressant car sa teneur en lithium élevée lui confère une conductivité électrique et une capacité électrochimique nettement meilleures que celles des polyacétylènes dopés au lithium connus actuellement.

Lorsque ce composé d'insertion contient six groupes CH par atome de lithium, il présente une conductivité électrique d'environ 250 S/cm.

Sa structure cristalline est également différente de celle des composés d'insertion polyacétylène-lithium connus qui ont été identifiés comme étant amorphes ou appartenant au système trigonal ou hexagonal.

De plus, ce composé d'insertion peut être préparé par un procédé simple, rapide et facile à mettre en oeuvre, ne nécessitant pas la manipulation parfois délicate de solvants souvent toxiques.

Aussi, l'invention a également pour objet un procédé de préparation d'un composé d'insertion polymère conjugué-lithium qui consiste à mélanger un polymère conjugué avec du lithium, et à comprimer le mélange ainsi obtenu.

Les polymères conjugués utilisables dans ce procédé sont les polymères susceptibles d'être dopés par du lithium, comme le polyacétylène, le polyparaphénylène, le poly(paraphénylènevinylène), le poly(paraphénylèneacétylène) et les combinaisons composites de ces polymères, substitués ou non, avec des polymères diélectriques comme le polystyrène, le polyéthylène et le polypropylène.

Pour la mise en oeuvre de ce procédé, le polymère, en particulier le polyacétylène, peut être sous la forme de poudre, de film, de fibres, de feutre, de tissu ou de mousse. Le lithium est généralement sous la forme de poudre. On peut toutefois utiliser le lithium sous d'autres formes, par exemple sous la forme de fils.

Pour cette préparation, dans le cas du polyacétylène, on choisit de préférence les quantités de lithium et de polyacétylène utilisées de façon telle qu'elles correspondent au moins à la stoechiométrie $Li(CH)_6$, afin d'obtenir un composé d'insertion riche en lithium.

On peut toutefois utiliser des quantités de lithium inférieures à cette stoechiométrie, en vue d'obtenir un produit intermédiaire présentant également des propriétés intéressantes.

On peut aussi utiliser des quantités supérieures de lithium.

Pour la mise en oeuvre de ce procédé, on peut réaliser la compression au moyen de dispositifs classiques tels que des presses à vis ou à piston. Pour la compression, on peut utiliser des pressions de 30 à $10^4$MPa. Dans le cas du polyacétylène, pour obtenir la stoechimétrie $Li(CH)_6$ ou moins, des pressions de 30 à 250MPa sont généralement suffisantes. Généralement, on opère à la température ambiante, mais on pourrait utiliser des températures inférieures ou supérieures allant par exemple jusqu'à 100°C.

La compression peut être réalisée en atmosphère de gaz rare tel que l'argon, sous vide ou dans un milieu liquide inerte vis-à-vis du lithium et du polymère.

La durée de la réaction dépend de la bonne homogénéisation du mélange. Ainsi, lorsqu'on utilise des poudres ou des fibres de polyacétylène qui favorisent un bon contact entre le polyacétylène et le lithium, les durées sont plus faibles que dans le cas où le polyacétylène est sous la forme de film.

A titre d'exemple, on peut effectuer la compression pendant des durées allant de 2 à 30h. Généralement, des durées de 4h à 24h sont suffisantes.

Le composé d'insertion polyacétylène-lithium correspondant au moins à la stoechiométrie $Li(CH)_6$ obtenu par le procédé de l'invention est très intéressant en raison de sa richesse en lithium et de sa possibilité de donner lieu à des réactions réversibles de désintercalation-intercalation du lithium qu'il contient.

Aussi, le composé d'insertion de l'invention peut être utilisé avantageusement dans un accumulateur électrique au lithium.

Un tel accumulateur électrique comprend habituellement une électrode négative à base de lithium, une électrode positive et un électrolyte conducteur par ions lithium.

Selon l'invention, cet accumulateur est caractérisé par l'emploi d'une électrode négative constituée par le composé d'insertion polyacétylène-lithium conforme à l'invention, correspondant au moins à la stoechiométrie $Li(CH)_6$.

Dans cet accumulateur électrique, l'électrode positive peut être réalisée en divers matériaux tels que des oxydes, des sulfures ou des oxysulfures.

A titre d'exemples d'oxydes utilisables, on peut citer l'oxyde de vanadium $V_2O_5$, l'oxyde de nickel $NiO_2$, l'oxyde de cobalt $CoO_2$, les oxydes mixtes de cobalt et de nickel, les oxydes de manganèse, l'oxyde de molybdène $MoO_3$, les oxydes de chrome, et les bronzes de vanadium $MxV_2O_5$, avec M représentant le fer, le sodium, le potassium, le lithium, l'argent, l'aluminium, le chrome, le baryum, le nickel ou le cobalt.

A titre d'exemples de sulfures utilisables, on peut citer le sulfure de titane $TiS_2$, le sulfure de molybdène $MoS_2$ et les sulfures mixtes de nickel et de molybdène.

A titre d'exemples d'oxysulfures utilisables, on peut citer les oxysulfures de molybdène et de titane.

Dans cet accumulateur électrique, l'électrolyte utilisé est généralement constitué par une solution de sel de lithium dans un solvant organique approprié.

Les solvants organiques utilisables sont par exemple le carbonate de propylène, le carbonate d'éthylène, le tétrahydrofurane, le 2-méthyltétrahydrofurane, le diméthoxyméthane, le diméthoxyéthane, le N,N-diméthylformamide, le sulfolane et des mélanges de ceux-ci.

Les sels de lithium utilisables sont par exemple le perchlorate de lithium $LiClO_4$, l'hexafluorophosphate de lithium $LiPF_6$, l'hexafluoroarséniate de lithium $LiAsF_6$, le trifluorométhanesulfonate de lithium $LiCF_3SO_3$ et le tétrafluoborate de lithium $LiBF_4$.

On pourrait également utiliser dans l'invention des électrolytes solides ou des polymères conducteurs par ion lithium.

A titre d'exemple d'électrolyte solide, on peut citer les verres au lithium obtenus par exemple à partir de $P_2S_5$, $Li_2S$ et LiI ou de $B_2S_3$, $Li_2S$ et LiI.

Les polymères conducteurs par ions lithium peuvent être constitués par exemple par du poly(oxyde d'éthylène) ou poly(oxyde de propylène) chargé d'un sel de lithium tel que les sels décrits précédemment.

Dans un accumulateur de ce type utilisant un électrolyte liquide, on dispose généralement un séparateur entre les électrodes, et celui-ci peut être constitué par un film microporeux réalisé par exemple en polypropylène ou en polyéthylène.

Cet accumulateur peut être réalisé sous la forme d'un accumulateur cylindrique comportant un enroulement en spirale des deux électrodes séparées éventuellement par le séparateur. Il peut également être réalisé sous la forme d'un accumulateur de type prismatique avec des électrodes planes en vis-à-vis et éventuellement un séparateur disposé entre ces électrodes.

Les composés d'insertion au lithium obtenus par le procédé de l'invention peuvent également trouver des applications en catalyse, par exemple pour des réactions de polymérisation.

D'autres caractéristiques et avantages de l'invention apparaîtront mieux à la lecture de la description qui suit donnée bien entendu à titre illustratif et non limitatif en référence au dessin annexé sur lequel

- les figures 1 et 2 sont des diagrammes de diffraction aux rayons X représentant les réflexions hk0 de composés d'insertion polyacétylène-lithium obtenus par le procédé de l'invention,
- la figure 3 est un diagramme de diffraction aux rayons X illustrant la première réflexion 001 d'un composé d'insertion polyacétylène-lithium $Li(CH)_6$ conforme à l'invention,
- les figures 4 à 6 sont des spectres de résonance paramagnétique électronique (RPE) obtenus avec du polyacétylène pur, un composé d'insertion polyacétylène-lithium $Li(CH)_{11}$ et le composé d'insertion polyacétylène-lithium $Li(CH)_6$ conforme à l'invention,

- la figure 7 est une représentation schématique d'un accumulateur électrique conforme à l'invention, et
- la figure 8 est une courbe de voltampérométrie cyclique du composé d'insertion $Li(CH)_6$ de l'invention.

Les exemples qui suivent illustrent la préparation de composés d'insertion polyacétylène-lithium par le procédé de l'invention.

**Exemple 1** : Préparation du composé $Li(CH)_6$

Dans cet exemple, on mélange 100mg de polyacétylène sous la forme d'ouate, c'est-à-dire de fibres, avec 9mg de lithium en poudre, dans une boîte à gants, sous atmosphère d'argon, puis on verse le mélange dans une presse à vis ayant un piston d'un diamètre de 13mm et on le comprime sous une pression de 100MPa pendant 4h toujours sous atmosphère d'argon. On démoule alors l'échantillon qui présente une couleur jaune d'or homogène.

On caractérise ensuite le composé obtenu dans cet exemple qui correspond à la stoechiométrie $Li(CH)_6$, par diffraction des rayons X et par résonance paramagnétique électronique (RPE).

**Exemple 2** : Préparation du composé $Li(CH)_{11}$.

Dans cet exemple, on suit le même mode opératoire que dans l'exemple 1 pour préparer un composé d'insertion polyacétylène-lithium mais on utilise seulement 5 mg de lithium, ce qui correspond à la stoechiométrie $Li(CH)_{11}$.

On caractérise également le composé d'insertion obtenu par diffraction des rayons X et par RPE.

Les résultats obtenus dans les exemples 1 et 2 sont les suivants.

Diffraction des rayons X.

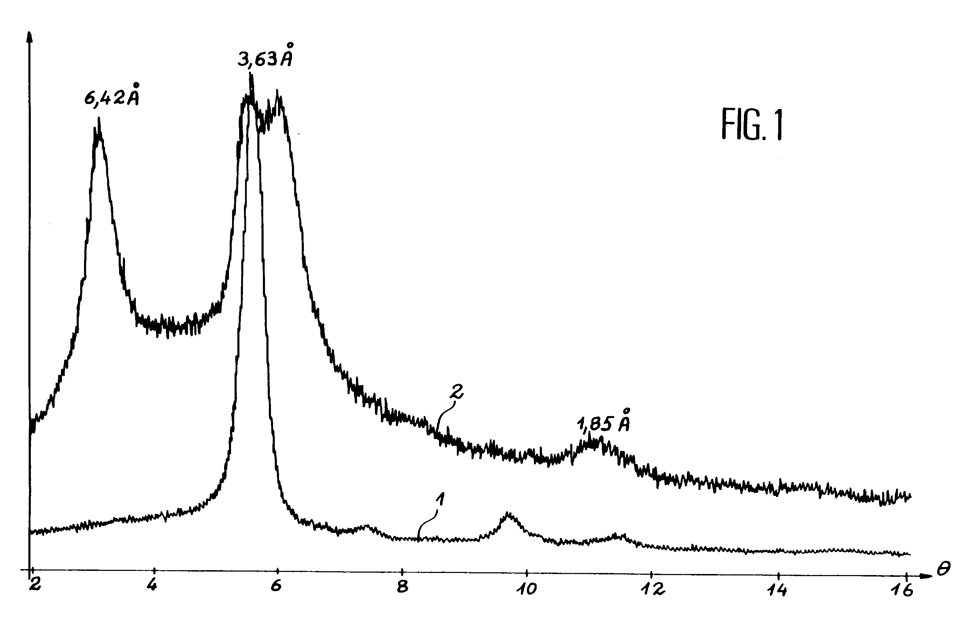

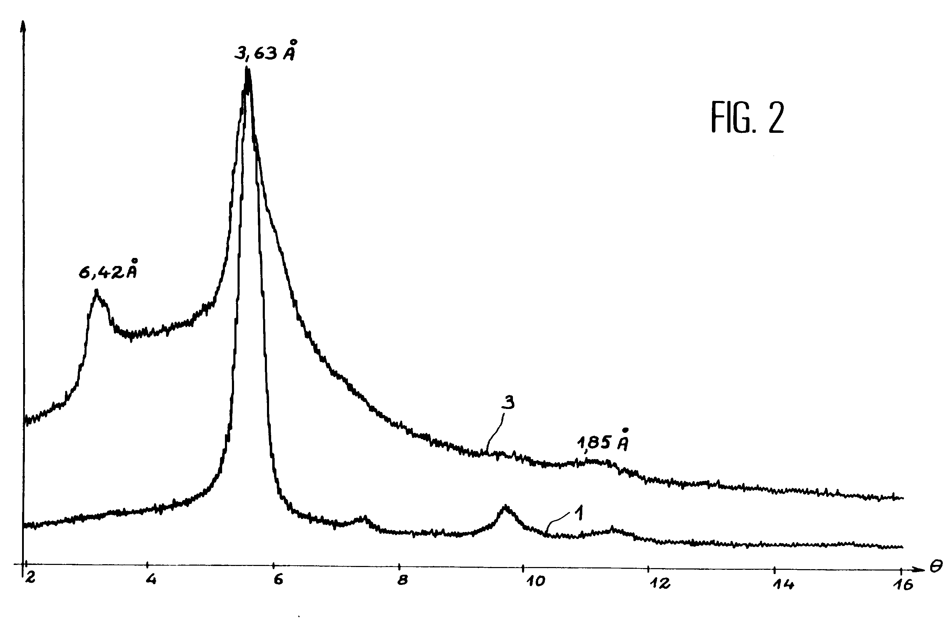

Les figures 1 et 2 représentent les diagrammes de diffraction X obtenus avec une anticathode au molybdène (rayonnement $K\alpha$) pour les réflexions hk0 du polyacétylène pur (courbe 1), du composé d'insertion polyacétylène-lithium $Li(CH)_6$ de l'exemple 1 (courbe 2) et du composé d'insertion polyacétylène-lithium $Li(CH)_{11}$ de l'exemple 2 (courbe 3).

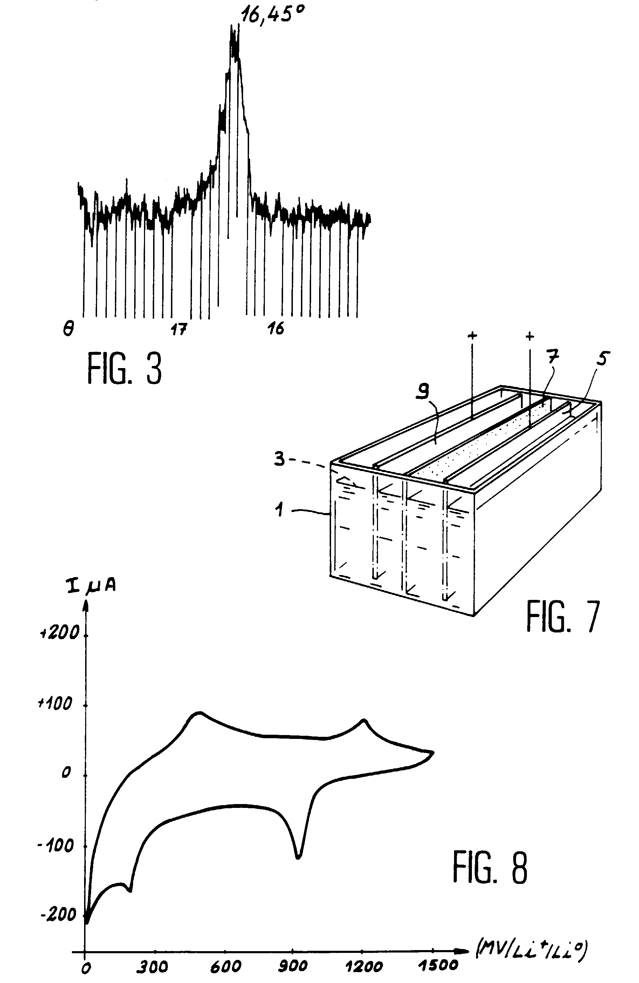

La figure 3 représente le diagramme de diffraction X pour la première réflexion 001 du composé d'insertion poly-acétylène-lithium $Li(CH)_6$ de l'exemple 1.

Ces figures montrent que les intensités des réflexions hk0 varient entre le composé d'insertion $Li(CH)_6$ et $Li(CH)_{11}$ mais qu'elles sont situées aux mêmes positions.

Ainsi, l'intensité augmente avec le taux d'insertion.

Les études aux rayons X ont porté sur l'analyse des réflexions hk0 (organisation dans le plan (ab), c'est-à-dire dans le plan perpendiculaire aux chaînes de polymère), sur l'analyse de la première réflexion 001 (organisation selon l'axe c, parallèle aux chaînes de polymère) et sur l'analyse des réflexions hk1 (mise en évidence de l'organisation tridimensionnelle).

Dans le tableau 1 ci-dessous, on a reporté les distances réticulaires correspondant aux réflexions hk0 observées à partir des résultats de la figure 1 et on a indiqué à titre de référence les résultats obtenus par Murthy et al dans Phys. Rev. B, Rapid Comm, vol. 40, n° 18, 1989, p. 12550 à 12553.

TABLEAU 1

| Ex. 1 | | MURTHY et al | |
|---|---|---|---|
| d(Å) | $I_{exp}$ | d(Å) | $I_{exp}$ |
| 6,42 | 60 | 6,30 | 10 |
| 3,63 | 80 | 3,67 | 100 |
| 3,26 | 100 | 3,18 | 5 |
| 1,85 | 10 | | |

Au vu des résultats donnés dans ce tableau, il apparaît que, pour les composés d'insertion préparés dans un milieu comportant un solvant organique, le maximum de l'intensité qui est observé à 3,67Å, correspond aux réflexions intenses du trans-polyacétylène non dopé (110 et 020 du $trans(CH)_x$).

En revanche, pour le composé d'insertion de l'invention, obtenu par compression, les intensités de réflexion hk0 à 6,42 Å et 3,63Å sont pratiquement équivalentes et le maximum est observé à 3,26Å.

Il ne reste plus de polyacétylène $(CH)_x$ vierge et la première réflexion 001, indexée ici en 002, mise en évidence par ailleurs est déplacée à 16°45 par comparaison avec la valeur 16°82 correspondant au polyacétylène non dopé.

Les valeurs des intensités des réflexions X des composés d'insertion de l'invention ne correspondent pas du tout à celles que l'on peut obtenir à partir de la maille hexagonale proposée par Murthy.

La longueur de cohérence observée sur la réflexion à 6,42Å est voisine de 50Å : cette réflexion est double (100+010).

Les données de diffraction X indiquent que la structure du composé d'insertion saturé $Li(CH)_6$ de l'invention, correspond à une structure monoclinique (maille hexagonale déformée) avec les caractéristiques suivantes : a=7,30Å, b=7,5Å et un angle bêta ( $\widehat{a,b}$ ) voisin de 120°C.

L'indexation des raies expérimentales est donc la suivante :

| d(Å) | hk0 |
|------|------|
| 6,42 | 100,010 |
| 3,63 | 110 |
| 3,26 | 200,020 |
| 1,85 | 310,130,220 |

Dans cette structure une colonne de lithium est entourée par trois chaînes de polyacétylène. La formule du composé est donc $Li(C_nH_n)_3$, et l'examen de la distance 002 correspond à un transfert de charge de 16,6% d'où la formule

$$Li(C_2H_2)_3$$

qui correspond à la position d'un ion lithium toutes les deux unités (CH) dans la direction parallèle aux chaînes de polymère.

Cette structure a été confirmée par un diagramme de fibres qui montre en plus l'organisation tridimensionnelle du composé $Li(CH)_6$.

Résonance paramagnétique électronique.

Les spectres obtenus sont représentés sur

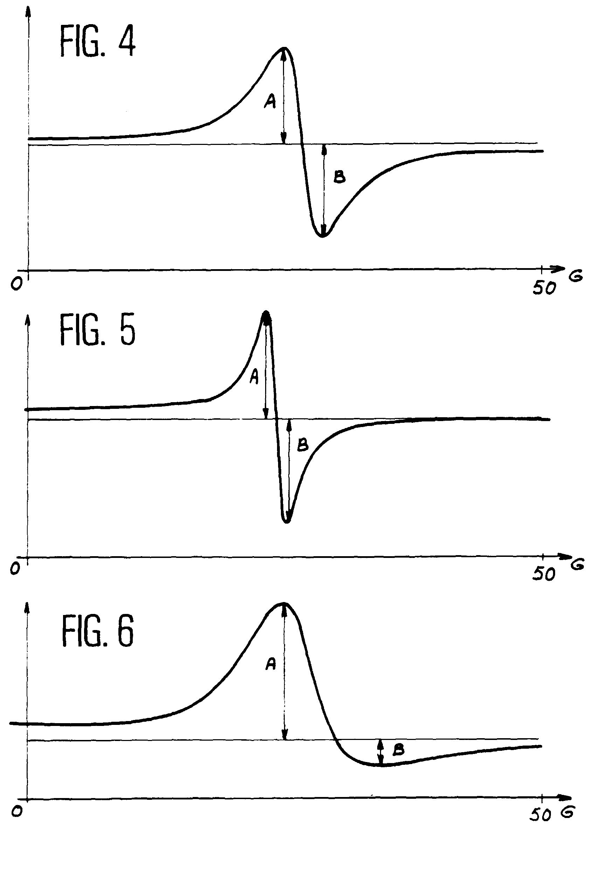

- la figure 4 dans le cas du polyacétylène pur,
- la figure 5 dans le cas du composé d'insertion $Li(CH)_{11}$ de l'exemple 2, et
- la figure 6 dans le cas du composé d'insertion $Li(CH)_6$ de l'exemple 1.

Les signaux RPE représentés sur ces figures sont caractérisés par leur largeur de raie $\Delta H_{pp}$ et par leur rapport d'asymétrie A/B et ces valeurs sont données dans le tableau 2 qui suit.

TABLEAU 2

|  | Gain | Balayage | $\Delta H_{pp}$ | A/B |
|---|------|----------|--------|-----|
| Polyacétylène pur (fig. 4) | $5.10^3$ | 50G | 4,7G | 1 |
| $Li(CH)_{11}$ (fig. 5) | $1,25.10^3$ | 50G | 2,9G | 1,08 |
| $Li(CH)_6$ (fig. 6) | $5.10^3$ | 50G | 9,5G | 4,25 |

Dans tous les cas les films ont une épaisseur de 75µm.

Le spectre de la figure 4 est caractéristique d'un film de polyacétylène renfermant un mélange d'isomères cis et trans. Le signal est dû aux électrons célibataires liés aux solitons neutres de la fraction trans du polyacétylène. La largeur de raie $\Delta H_{pp}$ est de 4,7G et elle est liée au rapport cis/trans. En effet, à titre de comparaison, la largeur de raie $\Delta H_{pp}$ d'un matériau totalement trans est inférieure à 2gauss. Le rapport A/B=1 indique que le matériau n'est pas conducteur.

Le spectre de la figure 5 qui correspond au composé d'insertion polyacétylène-lithium $Li(CH)_{11}$ montre que l'intensité et la largeur de raie ont diminué par rapport au polyacétylène pur alors que le rapport d'asymétrie A/B a augmenté légèrement à 1,08. Ce spectre est caractéristique d'un matériau faiblement dopé (diminution de l'intensité liée à la disparition des solitons neutres appariés par les électrons s des atomes de lithium intercalés), d'un matériau majoritairement trans (le dopage induit la transformation cis→trans) et enfin d'un matériau devenant conducteur puisque le rapport A/B est supérieur à 1.

Le spectre de la figure 6 qui correspond au composé d'insertion polyacétylène-lithium $Li(CH)_6$ montre que la largeur de raie $\Delta H_{pp}$ a nettement augmenté (9,5G) et qu'il en est de même du rapport A/B qui est de 4,25. L'augmentation du rapport A/B est caractéristique d'un matériau hautement conducteur.

A partir des spectres de RPE, on peut déterminer la conductivité électrique du composé en utilisant la courbe théorique de Kodera qui lie le rapport $d/\delta$ du matériau à A/B, d et $\delta$ représentant respectivement l'épaisseur géométrique de l'échantillon et l'épaisseur de peau.

La conductivité électrique $\sigma$ correspond à la formule suivante :

$$\sigma = (\pi^{\delta 2}\mu_0 \nu)^{-1}$$

dans laquelle $\mu_0$ représente la permittivité du vide,

$\nu$ représente la fréquence de l'excitation électromagnétique, et
$\delta$ représente l'épaisseur de peau.

Pour le composé d'insertion de l'exemple 1 dont le spectre RPE est illustré sur la figure 6, on trouve pour $\sigma$ deux valeurs qui sont respectivement 250 et 450S/cm, puisqu'un même rapport A/B est lié à deux possibilités.

Cette ambiguité peut être levée par une étude de l'évolution du signal avec la température T. En accroissant T, $\sigma$ augmente, ce qui se traduit par un déplacement sur la courbe de Kodera. Avant le maximum, A/B augmente en même temps que la température, alors qu'après le maximum, A/B décroît lorsque la température augmente. Des études en fonction de la température ont donc permis de lever ces ambiguités et on trouve que la valeur de $\sigma$ est de 250S/cm.

Une mesure de la conductivité électrique du composé par la technique directe à 4 contacts confirme cette valeur.

Ainsi, l'insertion de lithium induit un accroissement important de la conductivité électrique du matériau qui passe de $10^{-9}$S/cm pour le polyacétylène pur à quelques centaines de S/cm pour le composé d'insertion.

Sur la figure 7, on a représenté un accumulateur électrique au lithium utilisant le composé d'insertion polyacétylène-lithium de l'invention.

Sur cette figure, on voit que l'accumulateur comprend un récipient 1 en polytétrafluoroéthylène, rempli d'un électrolyte 3 constitué par exemple par du carbonate d'éthylène contenant 1mol/l de perchlorate de lithium, dans lequel sont disposés successivement une électrode négative 5 constituée par le composé d'insertion polyacétylène-lithium $Li(CH)_6$ de l'invention, un séparateur 7 constitué par une membrane microporeuse en polypropylène, et une électrode positive 9 en oxyde de vanadium.

Sur la figure 8, on a représenté la courbe de voltampérométrie cyclique obtenue avec une électrode négative, constituée par le composé d'insertion polyacétylène-lithium $Li(CH)_6$ de l'invention obtenu à partir de polyacétylène fibreux, en opérant dans les conditions suivantes :

- vitesse de balayage : 1,5mV/min,
- Température : 50°C ± 2
- Electrode de référence : $Li^+/Li^o$
- Electrolyte : carbonate d'éthylène contenant 1,075 mole de $LiClO_4$ par kg de carbonate d'éthylène,
- masse de l'électrode : 6,5 mg de polyacétylène fibreux.

Sur cette figure qui représente l'évolution de l'intensité de courant (I) en $\mu A$ en fonction du potentiel $V_S$ appliqué à l'électrode (en mV), on observe plusieurs pics de réduction et d'oxydation de l'électrode.

## Revendications

1. Composé d'insertion polyacétylène-lithium constitué uniquement de chaînes de polyacétylène et de lithium, caractérisé en ce qu'il contient au moins six groupes CH par atome de lithium et en ce qu'il présente une structure monoclinique.

2. Composé selon la revendication 1, caractérisé en ce qu'il contient 6 à 11 groupes CH par atome de lithium.

3. Composé selon la revendication 2, caractérisé en ce qu'il contient 6 groupes CH par atome de lithium.

4. Composé selon la revendication 3, caractérisé en ce qu'il présente une conductivité électrique d'environ 250 S/cm.

5. Procédé de préparation d'un composé d'insertion polyacétylène-lithium, caractérisé en ce qu'il consiste à mélanger un polyacétylène avec du lithium, et à comprimer le mélange ainsi obtenu.

6. Procédé selon la revendication 5, caractérisé en ce que le polyacétylène est sous la forme de poudre, de film, de fibres, de feutre, de tissu ou de mousse.

7. Procédé selon l'une quelconque des revendications 5 et 6, caractérisé en ce que l'on réalise la compression sous une pression de 30 à $10^4$ MPa.

8. Procédé selon l'une quelconque des revendications 5 et 6, caractérisé en ce que l'on réalise la compression sous une pression de 30 à 250MPa, pendant 2 à 24h.

9. Procédé selon l'une quelconque des revendications 5 à 8, caractérisé en ce que les quantités de polyacétylène et de lithium sont telles qu'elles correspondent à la stoechiométrie $Li(CH)_6$.

10. Accumulateur électrique comprenant une électrode négative à base de lithium, une électrode positive et un électrolyte conducteur par ions lithium, caractérisé en ce que l'électrode négative est constituée par le composé d'insertion polyacétylène-lithium selon l'une quelconque des revendications 1 à 4.

**Patentansprüche**

1. Einlagerungsverbindung aus Polyacetylen-Lithium, bestehend ausschließlich aus Ketten von Polyacetylen und Lithium, dadurch gekennzeichnet, daß sie pro Lithium-Atom mindestens sechs CH-Gruppen enthält und daß sie eine monokline Struktur besitzt.

2. Verbindung nach Anspruch 1, dadurch gekennzeichnet, daß sie pro Lithium-Atom 6 bis 11 CH-Gruppen enthält.

3. Verbindung nach Anspruch 2, dadurch gekennzeichnet, daß sie pro Lithium-Atom 6 CH-Gruppen enthält.

4. Verbindung nach Anspruch 3, dadurch gekennzeichnet, daß sie eine elektrische Leitfähigkeit von ungefähr 250 S/cm besitzt.

5. Verfahren zur Herstellung einer Polyacetylen-Lithium-Einlagerungsverbindung, dadurch gekennzeichnet, daß es darin besteht, ein Polyacetylen mit Lithium zu mischen und die so erhaltene Mischung zu pressen.

6. Verfahren nach Anspruch 5, dadurch gekennzeichnet, daß das Polyacetylen in Form von Pulver, Film, Fasern, Filz, Gewebe oder Schaum vorliegt.

7. Verfahren nach einem der Ansprüche 5 und 6, dadurch gekennzeichnet, daß man das Pressen mit einem Druck von 30 bis $10^4$ MPa ausführt.

8. Verfahren nach einem der Ansprüche 5 und 6, dadurch gekennzeichnet, daß man das Pressen 2 bis 24 Stunden lang mit einem Druck von 30 bis 250 MPa ausführt.

9. Verfahren nach einem der Ansprüche 5 bis 8, dadurch gekennzeichnet, daß die Mengen von Polyacetylen und Lithium derart sind, daß sie der stöchiometrischen Formel $Li(CH)_6$ entsprechen.

10. Elektrischer Sammler, enthaltend eine negative Elektrode auf Lithium-Basis, eine positive Elektrode und einen durch Lithiumionen leitenden Elektrolyten, dadurch gekennzeichnet, daß die negative Elektrode aus der Polyacetylen-Lithium-Einlagerungsverbindung nach einem der Ansprüche 1 bis 4 besteht.

**Claims**

1. Polyacetylene-lithium insertion compound constituted solely by polyacetylene and lithium chains, characterized in that it contains at least six CH groups per lithium atom and in that it has a monoclinic structure.

2. Compound according to claim 1, characterized in that it contains 6 to 11 CH groups per lithium atom.

3. Compound according to claim 2, characterized in that it contains six CH groups per lithium atom.

4. Compound according to claim 3, characterized in that it has an electrical conductivity of approximately 250 S/cm.

5. Process for the preparation of a polyacetylene-lithium insertion compound, characterized in that it consists of mixing a polyacetylene with lithium and compressing the thus obtained mixture.

6. Process according to claim 5, characterized in that the polyacetylene is in the form of powder, film, fibres, felt, fabric or foam.

7. Process according to either of the claims 5 and 6, characterized in that compression takes place under a pressure of 30 to $10^4$ MPa.

8. Process according to either of the claims 5 and 6, characterized in that compression takes place under a pressure of 30 to 250 MPa for 2 to 24 h.

9. Process according to any one of the claims 5 to 8, characterized in that the polyacetylene and lithium quantities are such that they correspond to the $Li(CH)_6$ stoichiometry.

10. Storage battery comprising a lithium-based negative electrode, a positive electrode and a lithium ion-conducting electrolyte, characterized in that the negative electrode is constituted by the polyacetylene-lithium insertion compound according to any one of the claims 1 to 4.

FIG. 1

FIG. 2

EP 0 666 884 B1

16,45°

θ      17      16

## FIG. 3

## FIG. 7

I μA

+200

+100

0

-100

-200

0   300   600   900   1200   1500   (MV/Li⁺/Li°)

## FIG. 8

FIG. 4

FIG. 5

FIG. 6